**Europäisches Patentamt**

**European Patent Office**

**Office européen des brevets**

(11) Veröffentlichungsnummer: **0 172 497**
**A2**

# EUROPÄISCHE PATENTANMELDUNG

(21) Anmeldenummer: **85109958.0**

(22) Anmeldetag: **07.08.85**

(51) Int. Cl.⁴: **A 23 B 4/02**

(30) Priorität: **25.08.84 DE 3431338**

(43) Veröffentlichungstag der Anmeldung:
**26.02.86 Patentblatt 86/9**

(84) Benannte Vertragsstaaten:
**AT BE CH FR GB IT LI LU NL SE**

(71) Anmelder: **Handsche, Hermann**
**Ringstrasse 56**
**D-7820 Titisee-Neustadt(DE)**

(72) Erfinder: **Handsche, Hermann**
**Ringstrasse 56**
**D-7820 Titisee-Neustadt(DE)**

(74) Vertreter: **Hubbuch, Helmut, Dipl.-Ing et al,**
**Patentanwälte Dr. Rudolf Bauer Dipl.-Ing. Helmut**
**Hubbuch Dipl.-Phys. Ulrich Twelmeier Westliche**
**Karl-Friedrich-Strasse 29-31**
**D-7530 Pforzheim(DE)**

(54) **Vorrichtung zur Pökelung von Fleisch und Schinken aller Art.**

(57) Die Erfindung betrifft eine Vorrichtung zur Pökelung von Fleisch und Schinken aller Art, wobei durch Programmierung der Arbeitsabläufe eine rationalisierung erreicht wird. Hierzu dient eine oder mehrere hintereinandergesetzte Vakuumkammern, welche auf der Frontseite zur Beschichtung öffen- und vakuumdicht verschließbar sind, wobei im Innern vorzugsweise eine Berieselungsanlage für Luft und/oder Lauge vorgesehen ist. Hiermit lassen sich Bündnerfleisch, Schinken und dgl. in hoher Qaulität bei automatischem Arbeitsablauf herstellen.

./...

Fig.2

Vorrichtung zur Pökelung von Fleisch und
Schinken aller Art

Die Erfindung betrifft eine Vorrichtung zur Pökelung
von Fleisch und Schinken aller Art.

Man kennt sowohl ein sogen. Trockenpökeln von Fleisch
und Schinken, wobei die Fleischstücke eingesalzen oder
auch mit Lauge behandelt und gepreßt werden. Daneben
gibt es auch das Naßpökeln, wobei in die Fleischstücke
Salz injiziert wird. In allen Fällen soll das Fleisch
haltbar und mürbe gemacht werden.

Diese Vorgänge erfordern viel Zeit und Handarbeit. Bekannt ist es hierbei die gesalzenen Fleischstücke aufeinander zu schichten und zu pressen.  Die ganze Behandlungsmethode ist heute aber noch sehr zeit- und arbeitsaufwendig.

Es ist nun Aufgabe der Erfindung hier eine  Vorrichtung
zu schaffen, welche der Rationalisierung  und Vorprogrammierung der Arbeitsabläufe dient und diese auch beschleunigt.

Diese Aufgabe wird gemäß der Erfindung durch eine Vorrichtung zur Pökelung von Fleisch und Schinken aller Art unter
Pressung aufeinandergeschichteter Fleischstücke gelöst,
welche sich kennzeichnet durch eine oder mehrere hintereinandergesetzte Vakuumkammern, welche auf der Frontseite
zur Beschichtung öffen- und vakuumdicht verschließbar sind, wobei im Innern vorzugsweise eine Berıeselungsanlage für Luft und/oder Lauge vorgesehen ist. Hiermit lassen sich Bündnerfleisch, Schinken und dgl. in hoher Qualität bei automatischem Arbeitsablauf herstellen.

Im einzelnen können die Vakuumkammern bei vorzugsweise tonnenförmigem Querschnitt front- und heckseitig offen und mit Flanschen versehen sein, welche der Aneinanderreihung dienen und endseitig mittels vakuumdichter Schwenktür oder Abschlußdeckel verschließbar sind, wobei der Beschickung Hordenwagen dienen, welche frontseitig einbringbar sind und auf Bodenleisten mit seitlicher Rollenführung laufen, wobei vorzugsweise für jede Kammer ein Wagen vorgesehen ist.

Desweiteren sind hohle Vibratorplatten vorgesehen, welche in etwa der Ladefläche eines Hordenwagens entsprechen und bei Stapelung der Fleischstücke zwischenlegbar sind, wobei die hohlen Vibratorplatten aus einem Rahmen mit Boden- und Deckelplatte bestehen, zwischen welchen flache Vibratoren eingebaut sind.

Weitere Einzelheiten der Vorrichtung zur Pökelung von Fleisch und Schinken aller Art gemäß der Erfindung sind an Hand von Zeichnungen im Folgenden erläutert, welche ein bevorzugtes Ausführungsbeispiel bringen und zwar zeigen:

Figur          eine Gesamtansicht einer erfindungsgemäßen Vorrichtung in perspektivischer
               Ansicht,

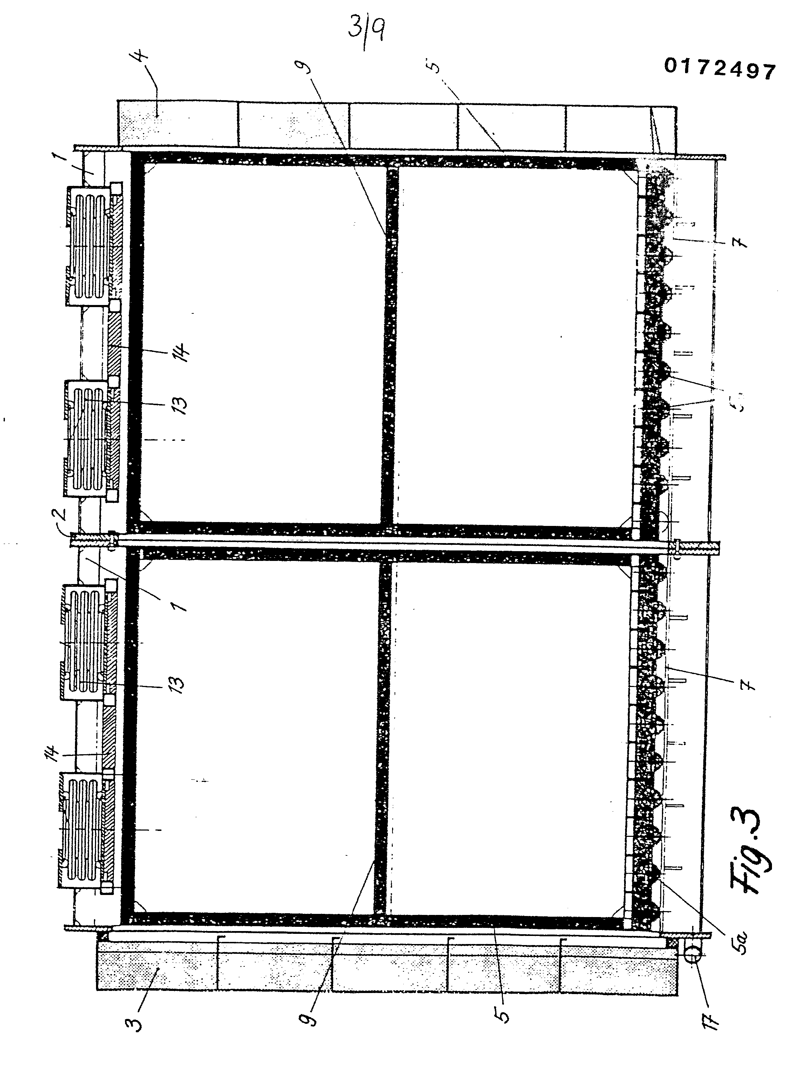

Figur 2 bis 4   eine Seitenansicht und Längsschnitte
               beim Einbringen von Hordenwagen in Seiten-und Aufriß.

Figur 5 und 6    einen Querschnitt und Längsschnitt mit
                 beschichteten Hordenwagen vor dem Preßvorgang,

Figur 7 und 8    einen Querschnitt und Längsschnitt mit be-
                 schichteten Hordenwagen beim Preßvor-
                 gang und

Figur 9 bis 11   eine Draufsicht mit Längs- und Querschnitt
                 einer hohlen Vibrationsplatte

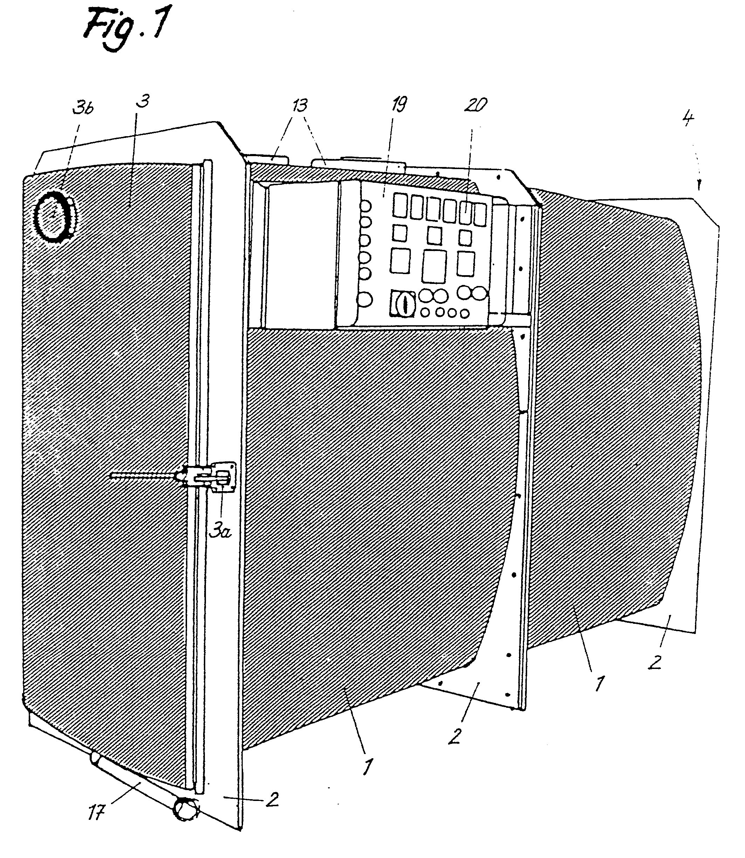

Wie aus der Zeichnung entsprechend Fig. 1 ff ersichtlich
wird, besteht die Vorrichtung zur Pökelung von Fleisch
und Schinken aus einer oder mehreren hintereinandersetzbaren Vakuumkammern 1, welche einen tonnenförmigen Querschnitt aufweisen und front- und heckseitig offen sind
und mit Flanschen 2 zum Aneinanderreihen versehen sind.
An der frontseite der ersten Vakuumkammer 1 ist zur Beschickung eine vakuumdicht verschließbare Schwenktür 3
mit Verschluß 3a und  Einblick 3b angeordnet, welche
über 90° zu öffnen ist und an der Heckseite der letzten
Vakuumkammer 1 ist ein Abschlußdeckel 4 vakuumdicht aufgebracht, z.B. aufgeschweißt. Hiermit lassen sich Einheiten
aus einem oder mehreren Vakuumkammern 1 zusammenstellen.

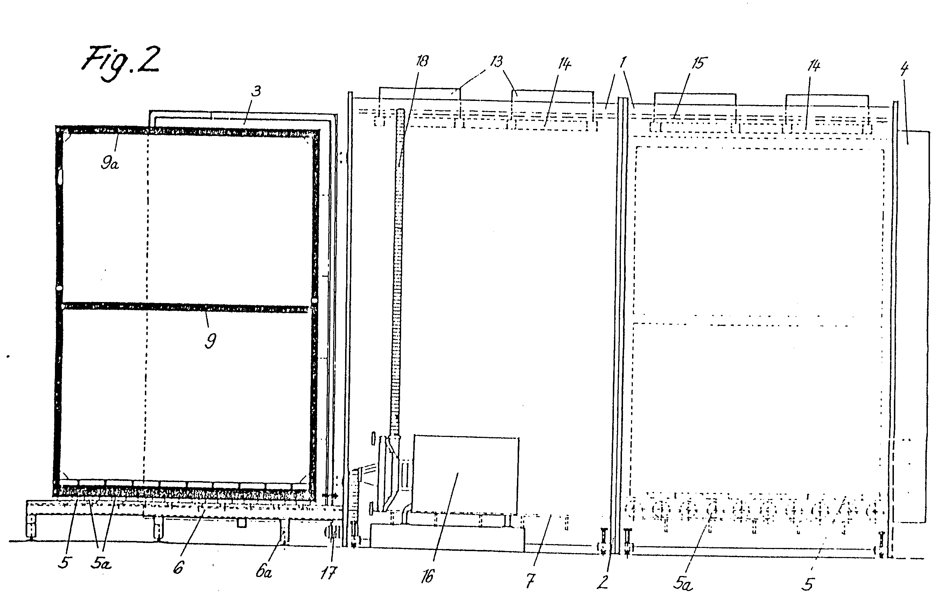

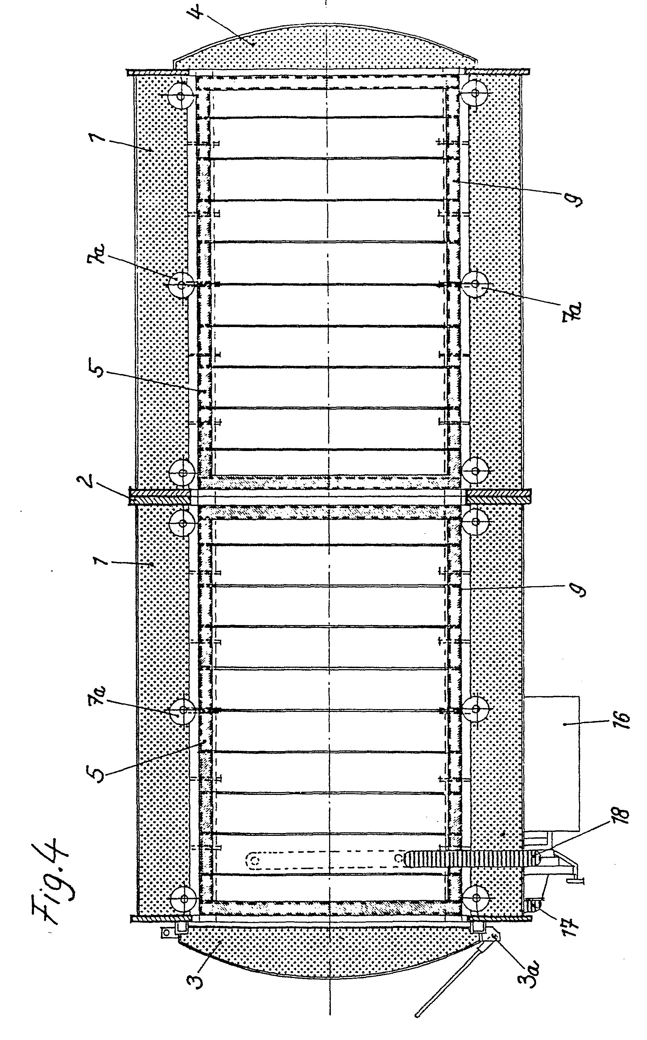

Der Beschickung dienen Hordenwagen 5 mit Luafrollen 5a,
welche bei geöffneter Schwenktür 3 entsprechend Fig. 2
und 3 frontseitig mittels Anschlußwagen 6  mit Rollen 6a
einbringbar sind und zwar über durchgehende Bodenleisten 7
einzufahren mit seitlicher Rollenführung 7a entsprechend Fig. 4, welche Rollen (7a) mittig entlang den Innenwänden jeder Vakuumkammer 1 vorgesehen sind. Die Hordenwagen 5 besitzen Kastenform und sind oben und vorderseitig offen. In ausgefahrenem Zustand erfolgt die Beschickung mit Fleischstücken 8 und Stapelung von vorn entsprechend Fig. 2. An der offenen Vorderseite dient jeweils mittig und oben ein Längssteg 9,9a zur Versteifung der Kastenform und ersterer auch zur Seitenführung beim Einbringen in die Vakuumkammer 1 für die Rollenführung 7a.

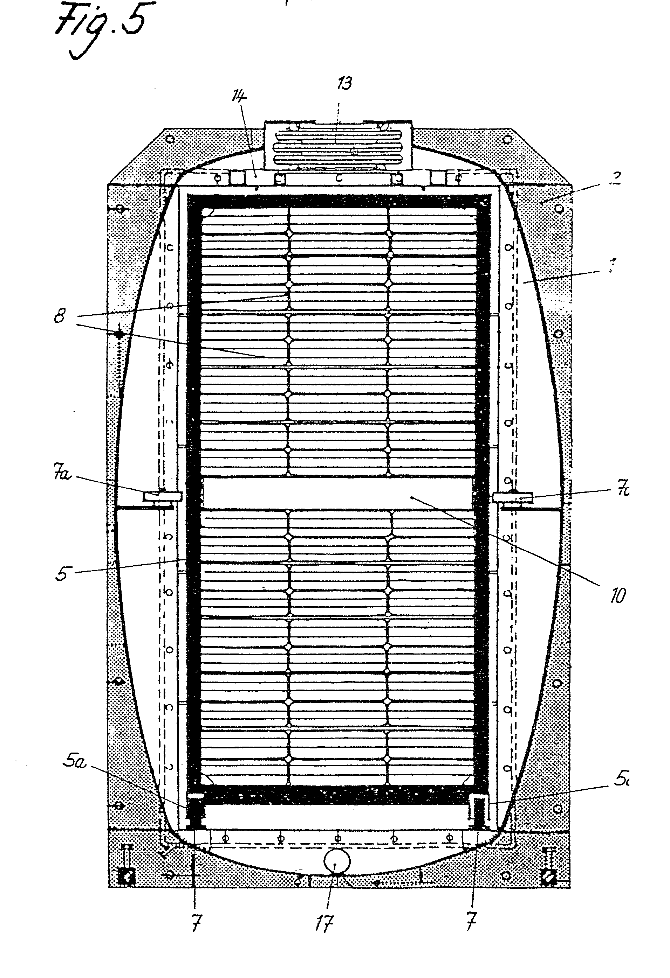

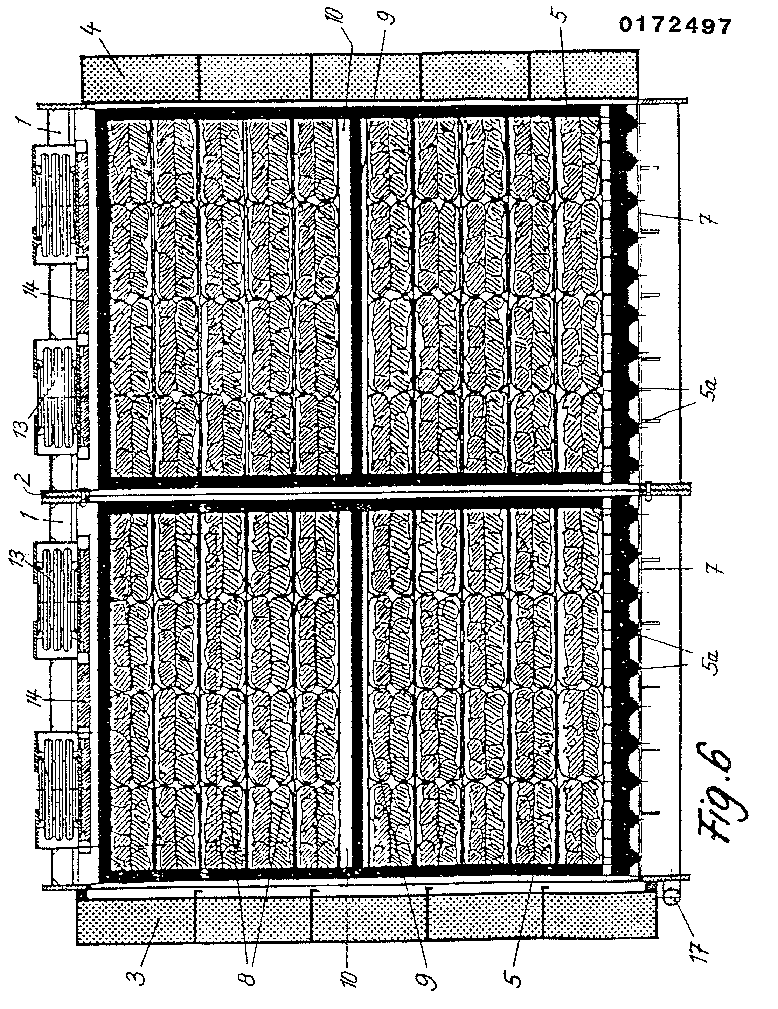

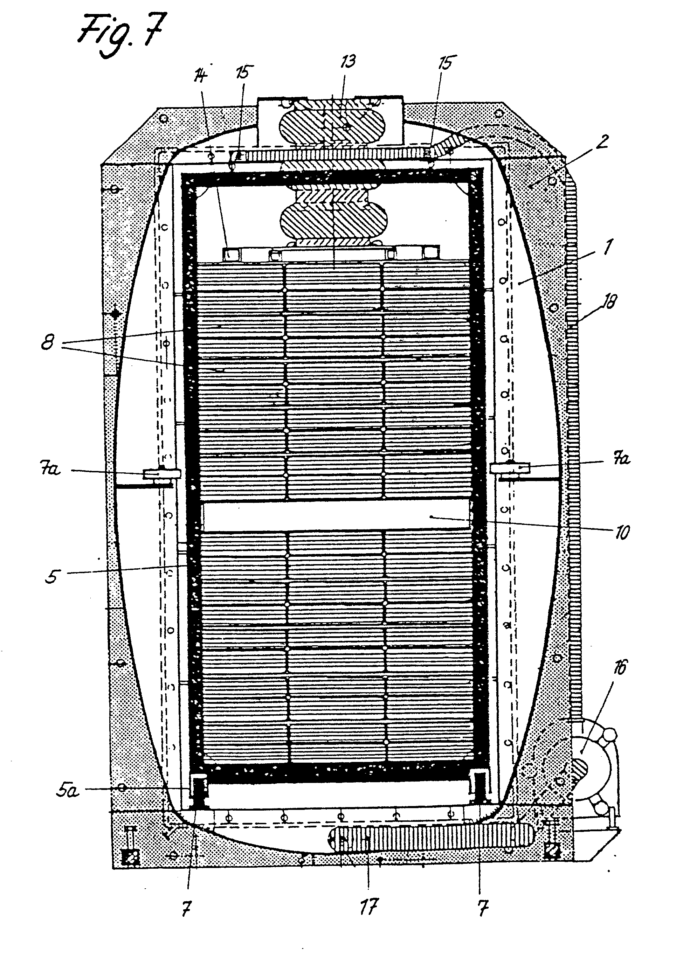

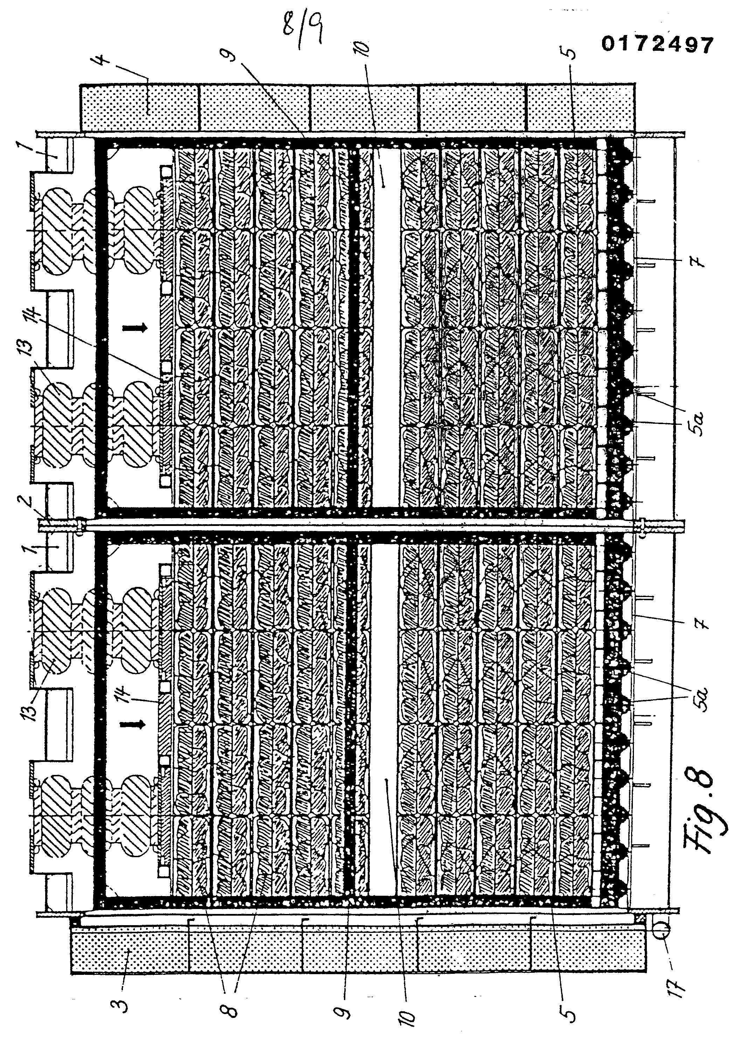

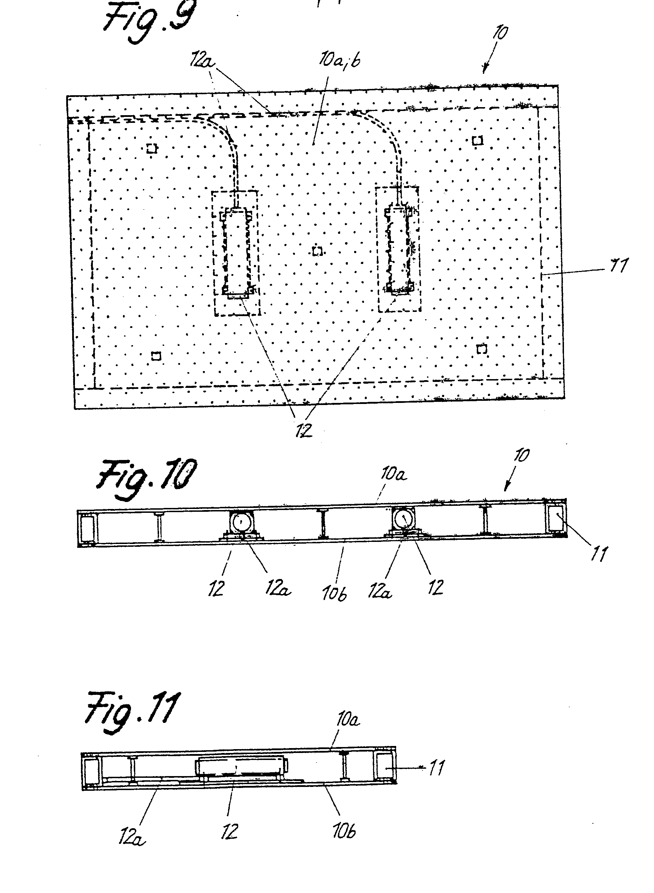

Es sind ferner hohle Vibratorplatten 10 vorgesehen, welche entsprechend Fig. 9 bis 11 aus einem Rahmen 11 mit Deckel- und Bodenplatte 10a und 10b bestehen, zwischen welchen flache Vibratoren 12 eingebaut sind. Diese Vibratoren 12 können beispielsweise mit elektrisch betriebenen Exzenterscheiben od. dgl. über Zuleitungen 12a gespeist arbeiten und sind als Zwischenlage (10) beim Beladen der Hordenwagen 5 mit Fleischstücken 8 entsprechend den Fig. 5 bis 8 einzubringen.

Im Deckenbereich der Vakuumkammern 1 sind mechan. oder pneumatisch beaufschlagbare Preßzylinder 13 eingebaut, welche z.B. mittels Federkraft oder Pneumatikzylindern beaufschlagbar und in Ruhestellung zum Ein- und Ausfahren der Hordenwagen 5 vorzugsweise mittels Magnetverriegelung gehalten sind. Den Preßzylindern sind Druckrahmen 14 zugeordnet, welche der Beaufschlagung der gestapelten Fleischstücke 8 bei eingefahrenen und beladenen Hordenwagen 5 über deren offene Oberseite dienen, entsprechend Fig. 5 bis 8.

Desweiteren sind noch Berieselungsrohre 15 für Luft und/oder Lauge im Deckenbereich neben den Druckrahmen 14 vorgesehen. Im unteren Außenbereich wenigstens jeweils einer Vakuumkammer 1 auch bei Hintereinanderschaltung mehrerer Kammern ist sodann ein Pumpenaggegrat 16 für die Luft- und Laugenzu- und Abfuhr und zur Vakuumbildung mit Absaugstutzen 17 im Fußbereich und Zuführung 18 zum Deckenbereich angeordnet.

Schließlich ist ebenso wenigstens jeweils an einer Vakuumkammer 1 auch bei Hintereinanderschaltung mehrerer Kammern 1 im oberen Außenbereich ein Steuerpult 19 vorgesehen mit Handschalter 20 und/oder programmierbaren Steuerschaltungen zur Betätigung der Vakuumeinstellung, Luft- und/oder Laugeneinbringung sowie Einstellung der Preß- und Vibrationsvorgänge einschließlich Zeitschaltuhren.

Somit läßt sich die erfindungsgemäße Vorrichtung über Einzelsteuerung und/oder Programmsteuerung auf unter- schiedlichste Arbeitszyklen für Pökelverfahren von Fleisch und Schinken zu deren Zubereitung einstellen unter Anwendung von verschiedenen Schwalleffekten mittels Vakuum, Luft und/oder Lauge bei zusätzlicher Pressung und Vibration.

Patentansprüche:

1. Vorrichtung zur Pökelung von Fleisch und Schinken aller Art unter Pressung aufeinandergeschichteter Fleischstücke, gekennzeichnet durch eine oder mehrere hintereinandergesetzte Vakuumkammern, welche auf der Frontseite zur Beschickung öffen- und vakuumdicht verschließbar sind, wobei im Innern vorzugsweise eine Berieselungsanlage für Luft und/oder Lauge vorgesehen ist.

2. Vorrichtung nach Anspruch 1, dadurch gekennzeichnet, daß die Vakuumkammern bei vorzugsweise tonnenförmigem Querschnitt front- und heckseitig offen und mit Flanschen versehen sind, welche der Aneinanderreihung dienen und endseitig mittels vakuumdichter Schwenktür oder Abschlußdeckel verschließbar sind.

3. Vorrichtung nach Anspruch 1 oder 2, dadurch gekennzeichnet, daß der Beschickung Hordenwagen dienen, welche frontseitig einbringbar sind und auf Bodenleisten mit seitlicher Rollenführung laufen, wobei vorzugsweise für jede Kammer ein Wagen vorgesehen ist.

4. Vorrichtung nach Anspruch 3, dadurch gekennzeichnet, daß die Hordenwagen in Kastenform mindestens oben und vorderseitig, letzteres zur Beschickung und Stapelung mit Fleischstücken, offen sind.

5. Vorrichtung nach Anspruch 4, dadurch gekennzeichnet, daß die Hordenwagen mittig an der offenen Vorderseite einen Längssteg aufweisen, welcher der Versteifung und Seitenführung beim Einbringen in der Vakuumkammer dient.

6. Vorrichtung nach einem der Ansprüche 1 bis 5, dadurch gekennzeichnet, daß hohle Vibratorplatten vorgesehen sind, welche in etwa der Ladefläche.eines Hordenwagens entsprechen und bei Stapelung der Fleischstücke zwischenlegbar sind.

7. Vorrichtung nach Anspruch 6, dadurch gekennzeichnet, daß die hohlen Vibratorplatten aus einem Rahmen mit Boden- und Deckelplatte bestehen, zwischen welchen flache Vibratoren eingebaut sind.

8. Vorrichtung nach einem der vorhergehenden Ansprüche, dadurch gekennzeichnet, daß im Deckenbereich der Vakuumkammern mechanisch oder pneumatisch beaufschlagbare Preßzylinder eingebaut sind, welche mittels Druckrahmen bei eingefahrenen Hordenwagen der Beaufschlagung der gestapelten Fleischstücke dienen.

9. Vorrichtung nach Anspruch 8, dadurch gekennzeichnet, daß die Preßzylinder in Ruhestellung vorzugsweise mittels Magnetverriegelung haltbar sind.

10. Vorrichtung nach einem der vorhergehenden Ansprüche, dadurch gekennzeichnet, daß die Berieselungsrohre für Luft und/oder Lauge im Deckenbereich neben den Druckrahmen untergebracht sind.

11. Vorrichtung nach einem der vorhergehenden Ansprüche, dadurch gekennzeichnet, daß im unteren Außenbereich der Vakuumkammern an diesen Pumpaggregate für Luft und Lauge montierbar sind mit Absaugstutzen im Fußbereich und Zuführung im Deckenbereich.

12. Vorrichtung nach einem der vorhergehenden Ansprüche, dadurch gekennzeichnet, daß im oberen Außenbereich der Vakuumkammern an diesen ein Steuerpult vorgesehen ist mit Einzelbetätigung und/oder programmierbaren Steuerschaltungen zur Betätigung der Vakuumeinstellung, Luft- und/oder Laugeeinbringung sowie Einstellung der Preß- und Vibrationsvorgänge.

0172497

Fig.1

Fig.2

Fig.3

0172497

Fig.4

0172497

Fig.5

0172497

5/9

0172497

Fig.6

Fig. 7

0172497

7/9

Fig.8

0472497

**Fig.9**

12a    10a,b    10

11

12

**Fig.10**    10a    10

12    12a    10b    12a    12    11

**Fig.11**    10a

11

12a    12    10b